# EUROPÄISCHE PATENTSCHRIFT

(11) **EP 2 714 489 B1**
(45) Veröffentlichungstag und Bekanntmachung des Hinweises auf die Patenterteilung: **24.02.2021**
(21) Anmeldenummer: 12725679.0
(22) Anmeldetag: 23.05.2012
(51) Int. Cl.: B62D 5/04, H02P 29/02, H02P 6/24

(54) **VERFAHREN UND VORRICHTUNG ZUM BETRIEB EINES BÜRSTENLOSEN MOTORS**
METHOD AND DEVICE FOR OPERATING A BRUSHLESS MOTOR
PROCÉDÉ ET DISPOSITIF PERMETTANT DE FAIRE FONCTIONNER UN MOTEUR SANS BALAIS

(30) Priorität: 26.05.2011 DE 102011076510
(43) Veröffentlichungstag der Anmeldung: 09.04.2014
(73) Patentinhaber: Continental Automotive GmbH, 30165 Hannover (DE)
(72) Erfinder: FERNENGEL, Mathias, 63128 Dietzenbach (DE); HEYER, Christian, 55595 Wallhausen (DE)
(86) Internationale Anmeldenummer: PCT/EP2012/059592
(87) Internationale Veröffentlichungsnummer: WO 2012/160090

(56) Entgegenhaltungen:
- WO-A2-2012/160092
- DE-A1-102005 001 703
- US-A1- 2010 017 063

## Beschreibung

Die vorliegende Erfindung betrifft ein Verfahren zum Betrieb eines bürstenlosen Elektromotors, dessen Wicklungen von einem Wechselrichter mit Hilfe von sechs Schaltern angesteuert werden, wobei der Wechselrichter drei Ausgänge aufweist, die den Wicklungen des Elektromotors zugeordnet sind und wobei zwischen den Ausgängen des Wechselrichters und den Wicklungen jeweils ein Leistungshalbleiterschalter angeordnet ist, und wobei eine Erkennungseinheit zum Erkennen von defekten Schaltern, eine Einheit zur Spannungsmessung an den Ausgängen des Wechselrichters und ein Motorwinkellagensensor zur Ermittlung der Motorwinkellage vorgesehen ist. Außerdem betrifft die vorliegende Erfindung eine Vorrichtung zum Betrieb eines bürstenlosen Elektromotors.

Wechselrichter zur Ansteuerung bürstenloser Motoren bestehen in der Regel aus sechs Schaltern. Jeder Schalter kann nach einem Defekt prinzipiell zwei verschiedene Eigenschaften aufweisen: Nicht leitend, das heißt in der geöffneten Schalterstellung blockiert, oder leitend, das heißt in der geschlossenen Schalterstellung blockiert. Ein leitend defekter Schalter ist umgangssprachlich auch als Kurzschluss bekannt. Besonders in sicherheitsrelevanten Anwendungen ist es dann wichtig, den Elektromotor sehr schnell in einem Notbetrieb weiter zu betreiben oder sofort abzuschalten.

Die Verwendung von Leistungshalbleiterschaltern hat gegenüber mechanischen Relais den Nachteil, dass beim Abschalten induktiver Lasten, abhängig von der Höhe des Laststroms und der Induktivität der Last, eine Energiemenge derartiger Höhe freiwerden kann, dass der Leistungshalbleiterschalter im Augenblick des Abschaltens zerstört wird und seine Aufgabe dadurch nicht mehr erfüllen kann. Speziell beim Einsatz für bürstenlose Motoren in sicherheitskritischen Anwendungen, bei denen das Abschalten des Motors im Leistungspfad für eine Schutzfunktion benötigt wird, muss eine Beschädigung der Leistungshalbleiterschalter vermieden werden. Eine sicherheitskritische Anwendung ist die Verwendung eines bürstenlosen Elektromotors in einer elektromechanischen Lenkung eines Kraftfahrzeugs.

Für derartige Anwendungen, bei denen die induktive Energie im Lastkreis die zulässige Absorptionsfähigkeit eines Leistungshalbleiterschalters übersteigt, ist es bekannt, stattdessen ein mechanisches Relais zu verwenden, das gegenüber heute marktüblichen Leistungshalbleiterschaltern bauartbedingt eine deutlich höhere Absorptionsfähigkeit aufweist. Das mechanische Relais verkraftet zwar die Abschaltenergie, die beim Schalten induktiver Lasten unter Strom zwangsläufig auftreten, und kann daher jederzeit betätigt werden. Es hat aber als mechanisches System sehr starke Verfügbarkeitsprobleme. Eine weitere Möglichkeit besteht in der Umleitung der beim Abschalten anfallenden Energiemenge in eine Energiesenke wie beispielsweise einer Suppressordiode, die den Leistungshalbleiterschalter entlastet.

Aus der WO 2012/160092 A2 ist ein Verfahren zum Betrieb eines bürstenlosen Elektromotors bekannt, dessen Wicklungen von einem Wechselrichter mit Hilfe von sechs Schalter angesteuert werden, wobei zwischen den Ausgängen des Wechselrichters und dem Motor jeweils ein Leistungshalbleiterschalter angeordnet ist. Ein Mikrocontroller ist zum Steuern der Schalter und der Leistungshalbleiterschalter vorgesehen. Dieser schaltet bei Erkennen eines defekten Schalters sowohl die Schalter als auch die Leistungshalbleiterschalter ab Aus der US 2010/0017063 ist ein ähnliches Verfahren beschrieben.

Der vorliegenden Erfindung liegt daher die Aufgabe zugrunde, ein Verfahren und eine Vorrichtung darzustellen, bei denen eine Beschädigung der Leistungshalbleiterschalter beim Abschalten induktiver Lasten zuverlässig vermieden wird.

Diese Aufgabe wird durch die Merkmale der unabhängigen Patentansprüche 1 und 6 gelöst. Dabei wird nach der Erkennung eines defekten Schalters der Wechselrichter in der Weise abgeschaltet, dass keine weitere Leistung in die Wicklungen (des Elektromotors mehr eingebracht wird und dass der Motorwinkellagensensor die Leistungshalbleiterschalter nacheinander in einer vorab bestimmten Motorwinkellage öffnet.

Vorteilhafte Weiterbildungen sind den Unteransprüchen entnehmbar.

So ist in einer bevorzugten Weiterbildung des erfindungsgemäßen Verfahrens vorgesehen, dass die Motorwinkellagen jeweils einer Wicklung und deren Leistungshalbleiterschalter zugeordnet werden und so gewählt werden, dass die zugeordneten Leistungshalbleitschalter beim Öffnen nicht beschädigt werden. Dazu werden die Motorwinkellagen so gewählt, dass der an den Leistungshalbleiterschaltern anliegende Drainstrom null, nahezu null oder negativ ist.

Dabei ist vorgesehen, dass die in denen die an den Leistungshalbleiterschaltern anliegenden Augenblickswerte der Drainströme, die das beschädigungsfreie Abschalten erlauben, deterministisch abhängig vom Motorwinkel ist. Wesentlich ist, dass eine direkte messtechnische Überwachung der Phasenströme für die Methode nicht zwingend benötigt wird, weil die für den Zweck benötigte Information aus dem gemessenen Motorwinkel bezogen werden kann.

Die genannte Aufgabe wird auch durch eine Vorrichtung gelöst, bei der der Wechselrichter nach der Erkennung eines defekten Schalters vom Mikrocontroller in der Weise abgeschaltet wird, dass keine weitere Leistung in die Wicklungen des Elektromotors mehr eingebracht wird und dass der Motorwinkellagensensor dazu eingerichtet ist, die Leistungshalbleiterschalter nacheinander in einer vorab bestimmten Motorwinkellage zu öffnen.

In einer besonders vorteilhaften Weiterbildung des Erfindungsgegenstandes ist der Motorwinkellagensensor dazu eingerichtet, die Motorwinkellagen jeweils einer Wicklung und deren Leistungshalbleiterschalter zuzuordnen und so zu wählen, dass die zugeordneten Leistungshalbleitschalter beim Öffnen nicht beschädigt werden. Dabei ist der Motorwinkellagensensor dazu eingerichtet, die Motorwinkellagen so zu wählen, dass der an den Leistungshalbleiterschaltern anliegende Drainstrom null, nahezu null oder negativ ist.

Es ist vorgesehen, dass die Leistungshalbleitschalter als Leistungs-MOSFET ausgebildet sind.

Eine weitere vorteilhafte Weiterbildung des Erfindungsgegenstandes sieht vor, dass die Einheit zum Erkennen von defekten Schaltern und die Einheit zur Spannungsmessung an den Ausgängen des Wechselrichters in den Mikrocontroller integriert sind.

Die Erfindung wird nachfolgend zweier Ausführungsbeispiele im Zusammenhang mit der beiliegenden Zeichnung näher erläutert. In der Zeichnung zeigen:
- Fig. 1: eine schematische Prinzipdarstellung der Wicklungen eines bürstenlosen Elektromotors und eines Wechselrichters nach dem Stand der Technik;
- Fig. 2a: ein Diagramm mit Motorwinkellagen zum Abschalten des zugeordneten Leistungshalbleiterschalter bei einer positiven Drehrichtung des Elektromotors;
- Fig. 2b: ein Diagramm mit Motorwinkellagen zum Abschalten des zugeordneten Leistungshalbleiterschalter bei einer negativen Drehrichtung des Elektromotors;
- Fig. 3: eine Fig. 1 entsprechende Prinzipdarstellung nach dem Stand der Technik;
- Fig. 4: eine schematische Prinzipdarstellung der erfindungsgemäßen Vorrichtung und
- Fig. 5: eine schematische Prinzipdarstellung eines zweiten Ausführungsbeispiels.

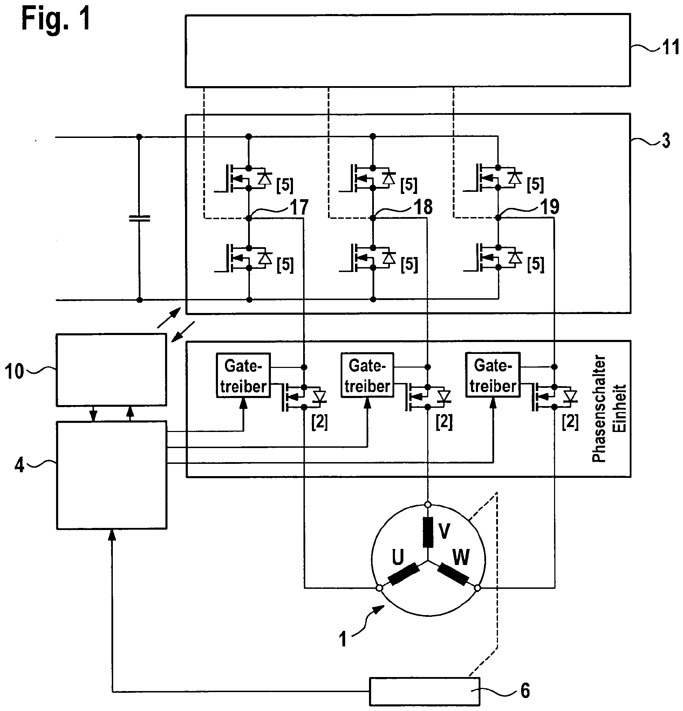

In Fig. 1 ist schematisch ein bürstenloser Elektromotor 1 dargestellt, dessen Wicklungen U, V, W von einem Wechselrichter 3 angesteuert werden. Zu diesem Zweck weist der Wechselrichter 3 sechs Schalter 5 auf, wobei die in Fig. 1 oberen Schalter 5 der positiven Versorgungsspannung und die in Fig. 1 unteren Schalter 5 der negativen Versorgungsspannung zugeordnet sind. Wie Fig. 1 weiter entnehmbar ist, befinden sich zwischen den oberen Schaltern 5, die der positiven Versorgungsspannung zugeordnet sind, und den unteren Schaltern 5, die der negativen Versorgungsspannung zugeordnet sind, Abgreifpunkte 17, 18, 19, an denen die an den Wicklungen U, V, W anliegende Spannung abgegriffen wird und einer Einheit 11 zur Spannungsmessung zugeführt wird. Die Messergebnisse der Einheit 11 zur Spannungsmessung werden einem Mikrocontroller 4 zugeführt, der einerseits die Schalter 5 steuert und andererseits die von der Spannungsmessungseinheit 11 erzeugten Informationen auswertet. Außerdem ist eine Erkennungseinheit 10 zum Erkennen von defekten Schaltern 5 vorgesehen. Die von der Erkennungseinheit 10 erzeugten Informationen werden ebenfalls dem Mikrocontroller 4 zur Auswertung zugeführt. In den Phasenleitungen, die zu den Wicklungen U, V, W führen, sind Leistungshalbleiterschalter 2 angeordnet.

In einer Ausführungsform in der Praxis werden die Schalter 5 durch Halbleiterschalter bzw. Transistoren oder MOSFETs gebildet. Die Erkennungseinheit 10 ist in der Praxis als Brückentreiber ausgebildet und legt an die als Transistoren ausgebildeten Schalter 5 eine Spannung an und kontrolliert, ob die Schalterstellung des Transistors wechselt. Die Einheit 11 zur Spannungsmessung an den Abgreifpunkten 17, 18, 19 ist in der Praxis als Spannungsteiler ausgebildet und ermittelt das Tastverhältnis einer pulsweitenmodulierten Spannung. Das Tastverhältnis entspricht dabei dem Quotienten aus Impulsdauer und Periodendauer.

Jeder Schalter 5 kann prinzipiell zwei verschiedene Arten eines Defekts aufweisen bzw. befindet sich nach einem Defekt grundsätzlich in einer der beiden nachfolgend beschrieben Zustände: Nicht leitend defekt, das heißt in der geöffneten Schalterstellung blockiert, oder leitend defekt, das heißt in der geschlossenen Schalterstellung blockiert. Ein leitend defekter Schalter 5 ist umgangssprachlich auch als Kurzschluss bekannt.

Besonders in sicherheitsrelevanten Anwendungen, wie in einer elektromechanischen Lenkvorrichtung, ist es wichtig, den Elektromotor 1 sehr schnell in einem Notbetrieb weiter zu betreiben oder sofort abzuschalten. Der Fehlerfall des leitend defekten Schalters 5 führt zu einem erhöhten Lenkmoment, da der Fahrzeugführer im Fehlerfall den Elektromotor 1 im Generatorbetrieb bewegt und dabei einen Strom induziert, der der Lenkbewegung am Lenkrad gerade entgegen wirkt. Dieses entgegen der Drehrichtung des Fahrzeugführer wirkende Moment wird im Folgenden Bremsmoment genannt. Durch den Kurzschluss im Wechselrichter 3 wird in einer permanent erregten Synchronmaschine ein drehzahlabhängiges Bremsmoment erzeugt. Durch einen leitend defekten Schalter 5 entsteht durch Induktion ein Stromschluss über die Motorwicklungen U, V, W.

Für den Anwendungsfall des bürstenlosen Elektromotors 1 sind die Phasenanschlüsse des Elektromotors 1 über Leistungshalbleiterschaltern 2 mit den Ausgängen des antreibenden Wechselrichters 3 verbunden. Der Zweck dieser Anordnung ist es, im Falle eines Defekts im Wechselrichter 3 den Elektromotor 1 stromfrei und damit frei von den eben beschriebenen Bremsmomenten zu machen. Dies bezeichnet man auch als Sicherheitsabschaltung. Nach Erkennung eines Defekts im Wechselrichter 3 durch den Mikrocontroller 4 wird zunächst der Wechselrichter 3 abgeschaltet, d.h. die Schalter 5 geöffnet sodass keine weitere elektrische Leistung mehr in den Elektromotor 1 eingebracht wird. Sofern der Elektromotor 1 entweder durch Trägheit oder durch Antrieb von außen noch in rotierendem Zustand ist, baut sich durch die Gleichrichtung der Induktionsspannung des Elektromotor 1 über parasitäre Dioden und einen als leitend defekt anzunehmenden Schalter 5 innerhalb des Wechselrichters 3 periodisch eine Stromkuppe auf, die das unerwünschtes Bremsmoment hervorruft. Die Abschaltung der Leistungshalbleiterschalter 2 in den Phasenleitungen unterbindet dieses. Damit die Leistungshalbleiterschalter 2 dabei nicht durch eine unzulässig hohe induktive Energiemenge aus dem Elektromotor 1 beschädigt werden, werden diese individuell in Fenstern bestimmter Motorwinkellagen ϕ_{U}, ϕ_{V}, ϕ_{W} abgeschaltet, bei deren Durchschreiten der Stromverlauf in den jeweiligen betreffenden Wicklung U, V, W für den zugeordneten Leistungshalbleiterschalter 2 unschädlich ist. Die Leistungshalbleiterschalter 2 sind als Leistungs-MOSFET ausgeführt und kurzfristige Werte des Drainstroms I_{D} von Null, negativ oder gering positiv sind unschädlich. Dabei ist es bei diesem Verfahren kennzeichnend, dass die geeigneten Motorwinkellagefenster ϕ_{U}, ϕ_{V}, ϕ_{W} unabhängig vom Ort des leitend defekten Schalters 5 im Wechselrichter 3 immer gleich bleiben und nur von der Drehrichtung des Elektromotors 1 abhängen. Es genügt somit das gezielte Abschalten der einzelnen Leistungshalbleiterschalter 2 anhand der Erkennung der zulässigen Motorwinkellagefenster ϕ_{U}, ϕ_{V}, ϕ_{W} durch den Mikrocontroller 4. Die Erfassung der Motorwinkellage ϕ_{U}, ϕ_{V}, ϕ_{W} wird mit Hilfe eines Motorwinkellagensensors 6 vorgenommen. Die Erfassung der Motorwinkellage ϕ_{U}, ϕ_{V}, ϕ_{W} ist für die Ansteuerung eines bürstenlosen Elektromotors 1 notwendig. Ein weiterer Sensor zur Durchführung des hier beschriebenen Verfahrens ist somit nicht notwendig.

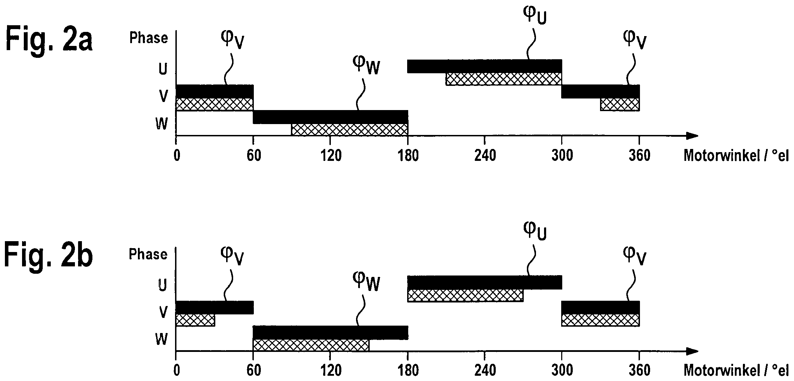

Wie eben erwähnt sind die geeigneten Motorwinkellagefenster ϕ_{U}, ϕ_{V}, ϕ_{W} unabhängig vom Ort des leitend defekten Schalters 5 im Wechselrichter 3. Die geeigneten Motorwinkellagen ϕ_{U}, ϕ_{V}, ϕ_{W} bleiben vielmehr immer gleich. Dieser Zusammenhang ist in Fig. 2 dargestellt.

Bei einem dreiphasigen BLDC Motor sind die Motorwinkellagefenster, in denen die durch die induzierten Spannungen und bedingt durch einen leitend defekten Schalter 5 im Wechselrichter 3 hervorgerufenen Ströme in den einzelnen Phasen Null sind, theoretisch bis zu 120° breit. Definiert man den Motorwinkel ϕ=0° dort, wo die induzierte Spannung des von außen angetriebenen Motors 1 der Phase U ihr Maximum hat, liegen die stromfreien Winkelfenster für die drei Phasen in den Intervallen ϕ_{U}=[300°; 60°], ϕ_{V}=[60°; 180°] und ϕ_{W}=[180°; 300°]. Diese Werte gelten für idealisierte Verhältnisse, bei denen die durch die mechanische Drehzahl N des Motors sich ergebende elektrische Periodenzeit TPER=1/(N*Polpaarzahl) klein bleibt gegenüber der Zeitkonstanten der Phasenimpedanz τPH=L/R und daher die Ströme und Spannungen im Motor noch annähernd deckungsgleich verlaufen. In der Praxis sind diese idealisierten Verhältnisse jedoch nicht zwingend gegeben. So muss berücksichtigt werden, dass je nach Motorkennwerten und der höchsten zu berücksichtigender Drehzahl die Motorwinkellagefenster kleiner als 120° und außerdem drehrichtungsabhängig werden können, wie es in Fig. 2a und 2b dargestellt ist. Die Grenzwerte der Motorwinkellagefenster sind für den konkreten Anwendungsfall zu bemessen. An der grundsätzlichen Methode des Abschaltens innerhalb vorbestimmter Motorwinkellagefenster ändert sich hierdurch jedoch nichts.

Die Motorwinkellagefenster ϕ_{U}, ϕ_{V}, ϕ_{W} für das Abschalten sind leider nicht für jede Anwendung gleich. Die durch die von außen erzwungene Rotation der Motorwelle erzeugt zwar stets die drei induzierten Spannungen mit dem um jeweils 120° zueinander verschobenen Sinusverläufen entsprechend einem Dreiphasensystem für einen dreiphasigen bürstenlosen Elektromotor 1 und diese dann in der Folge zum Aufbau der Stromkuppen führen. Allerdings verlaufen diese Stromkuppen nicht deckungsgleich zu den induzierten Spannungen, sondern erleiden bedingt durch die komplexe Impedanz der Motorphasen U, V, W erstens einen Zeitverzug und zweitens eine Formverzerrung bedingt durch die äußere Randbedingung mit dem Kurzschluss in dem Wechselrichter 3. Desweiteren verbreitern sich die Stromkuppen mit steigender Motordrehzahl N und die Motorwinkellagefenster ϕ_{U}, ϕ_{V}, ϕ_{W} werden entsprechend kleiner. Letztlich ist Bestimmung der Motorwinkellagefenster ϕ_{U}, ϕ_{V}, ϕ_{W} eine Bemessungsaufgabe, die die Kennwerte des verwendeten Elektromotors sowie die maximal zu betrachtende Drehzahl N berücksichtigt. Auch die für die Leistungshalbleiterschalter 2 zulässige Energiemenge ist ein Kriterium: Je höher diese ist, desto grösser darf der kurzfristige Wert des Phasenstroms beim Abschalten noch sein, was beim maximieren der Motorwinkellagefenster ϕ_{U}, ϕ_{V}, ϕ_{W} hilfreich ist.

In Fig. 2a und 2b sind als schwarz durchgezogene Blöcke die idealisierten Verhältnisse bei einem Motor mit sehr kleinem Verhältnis von Phaseninduktivität zu Phasenwiderstand dargestellt. Unter diesen Idealbedingungen beträgt das Motorwinkellagefenster ϕ_{U} für die Wicklung U von 300° bis 60°, für die Wicklung V entsprechend das Motorwinkellagefenster ϕ_{V} von 60° bis 180° und für die Wicklung W Motorwinkellagefenster ϕ_{W} von 180° bis 300°. Darunter sind als schraffierte Blöcke die oben kurz beschriebenen prinzipiellen Verkürzungen der Motorwinkellagefenster ϕ_{U}, ϕ_{V}, ϕ_{W} für Motoren mit hohem L/R Verhältnis und hoher Drehzahl dargestellt.

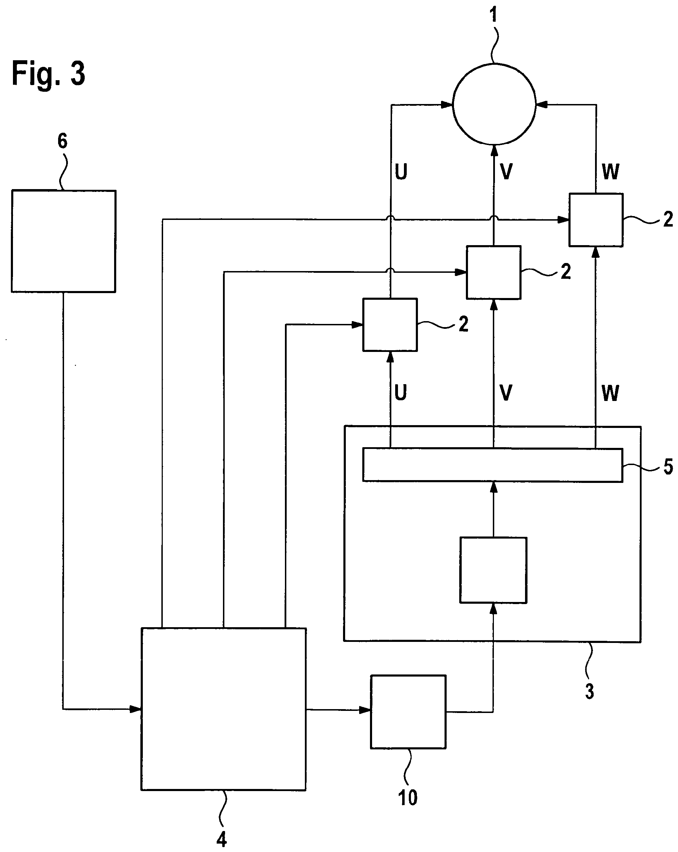

In Fig. 3 ist eine Darstellung entsprechend der Fig. 1 gewählt. Der Elektromotor 1 wird vom Umrichter 3 angesteuert, indem die Schalter 5, die in Fig. 3 als gemeinsamer Block dargestellt sind, geöffnet oder geschlossen werden. Zwischen den Schaltern 5 und den Wicklungen U, V, W des Elektromotors 1 sind die Leistungshalbleiterschalter 2 angeordnet. Wie anhand der Fig. 1 und 2 bereits erläutert, werden die Leistungshalbleiterschalter 2 im Fehlerfall in Abhängigkeit der Motorwinkellagen ϕ_{U}, ϕ_{V}, ϕ_{W} geöffnet. Bei diesen vorbekannten Anordnungen liefert die Motorwinkellagensensor 6 seine Ausgangssignale an den Mikrocontroller 4. Der Mikrocontroller 4 steuert die Leistungshalbleiterschalter 2 an.

Es besteht im Falle eines leitend defekten Schalters 5 im Wechselrichter 3 die Gefahr, dass der Mikrocontroller 4 als Fehlerfolge ebenfalls zerstört wird. Damit der Mikrocontroller 4 die Leistungshalbleiterschalter 2 bei defektem Schalter 5 im Wechselrichter 3 immer noch sicher öffnen kann, ist eine aufwändige Entkopplung zwischen dem Wechselrichter 3 und dem Mikrocontroller 4 notwendig.

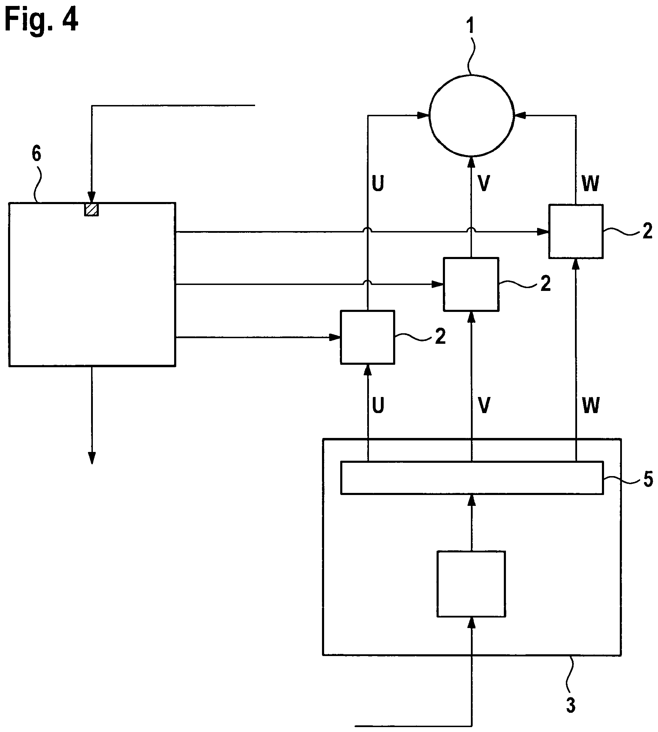

Der erfindungsgemäße Gedanke ist es daher, dass die Leistungshalbleiterschalter 2 nicht mehr vom Mikrocontroller 4 angesteuert werden, sondern direkt vom Motorwinkellagensensor 6. So werden bei der in Fig. 4 dargestellten Vorrichtung die Signale zum sicheren Öffnen der Leistungshalbleiterschalter 2 direkt aus dem Motorwinkellagensensor 6 heraus generiert. Dies ist besonders vorteilhaft, da alle für das sichere Öffnen der Leistungshalbleiterschalter 2 notwendigen Informationen, wie Motorwinkellage ϕ, Motorgeschwindigkeit und Drehrichtung, in diesem Motorwinkellagensensor 6 bereits vorhanden sind.

Der erfindungswesentliche Gedanke ist es, dass die Initiative zum Öffnen der Leistungshalbleiterschalter 2 nicht mehr vom Mikroprozessor 4 ausgeht, sondern vom motorwinkel- und motorgeschwindigkeitsgebenden Motorwinkellagensensor 6. Diese Lösung ist unabhängig vom Mikroprozessor 4 und kann daher sehr kostengünstig in ein motorwinkel- und motorgeschwindigkeitsgebendes System integriert werden.

Mit steigender Motordrehzahl wird das Winkelfenster zum sicheren Öffnen der Leistungshalbleiterschalter 2 kleiner und zudem führt die höhere Drehzahl des Elektromotors 1 dazu, dass das kleiner werdende Winkelfenster auch noch schneller durchschritten wird. Aus diesem Grund sind bei sehr hohen Drehzahlen für ein sicheres Öffnen der Leistungshalbleiterschalter 2 sehr präzise Signale mit kurzen Latenzzeiten notwendig, sodass zum Zeitpunkt des Öffnens der Leistungshalbleiterschalter 2 immer noch geringe oder negative Motorströme vorliegen. Daher ist die Generierung der Signale zum Öffnen der Leistungshalbleiterschalter 2 direkt aus dem motorwinkel- und motorgeschwindigkeitsgebenden Motorwinkellagensensor 6 sehr vorteilhaft, da diese Anordnung eine extrem hohe Aktualisierungsrate bei kürzester Verarbeitungszeit erlaubt. Die sehr kurze Verarbeitungszeit wird vor allem auch dadurch erreicht, dass die Motorwinkel- und Motorgeschwindigkeitsinformationen nicht an den Mikroprozessor 4 übertragen werden müssen.

Somit ist ein sicheres Öffnen der Leistungshalbleiterschalter 2 bei Ansteuerung direkt aus dem winkelgebenden Motorwinkellagensensor 6 bei höheren Drehzahlen möglich, als wie das mit der Ansteuerung aus dem Mikroprozessor 4 möglich wäre.

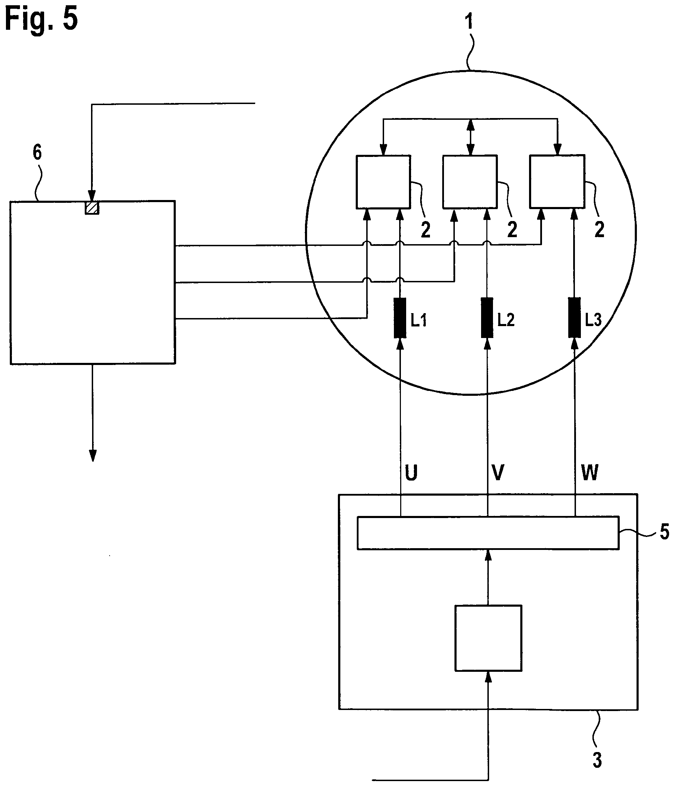

In Fig. 5 ist eine zweite Ausführungsform dargestellt, die eine Topologie der Leistungshalbleiterschalter 2 als "Sternpunktschalter" aufweist: Die Leistungshalbleiterschalter 2 sind wiederum als Leistungs-MOSFET ausgebildet und verbinden die Endanschlüsse der Motorphasen U, V, W zum "Sternpunkt". An der Nutzung der Motorwinkellage ϕ zum individuellen Abschalten der Leistungshalbleiterschalter 2 innerhalb der geeigneten Motorwinkellagefenster ϕ_{U}, ϕ_{V}, ϕ_{W} ändert sich gegenüber der in Fig. 4 dargestellten Ausführungsform nichts.

Die Anwendung des beschriebenen Verfahrens erlaubt die Verwendung von Leistungshalbleiterschaltern 2 als Sicherheitseigenschaft in einem System zum Betrieb eines bürstenlosen Elektromotors 1, auch wenn die durch die Höhe der Motorinduktivitäten und -ströme eines solchen Systems sich maximal ergebende mögliche induktive Energiemenge die Absorptionsfähigkeit verfügbarer und/oder wirtschaftlich vertretbarer Leistungshalbleiterschalter übersteigt. Der Einsatz eines mechanischen Relais, der vielfach wegen mangelnder Zuverlässigkeit, Abnutzungseigenschaften, Feuchteempfindlichkeit, veränderlicher Kontakteigenschaften etc. nicht erwünscht ist, kann damit umgangen und die zuweilen auch konstruktionsbedingt eher bevorzugte Lösung mit Leistungshalbleiterschaltern zum Einsatz gebracht werden, ohne zusätzliche Schaltmittel zur externen Energieabsorption wie Suppressordioden oder Einrichtungen zur Strommessung einführen zu müssen.

## Patentansprüche

1. Verfahren zum Betrieb eines bürstenlosen Elektromotors (1), dessen Wicklungen (U, V, W) von einem Wechselrichter (3) mit Hilfe von sechs Schaltern (5) angesteuert werden, wobei der Wechselrichter (3) drei Ausgänge (17, 18, 19) aufweist, die den Wicklungen (U, V, W) des Elektromotors (1) zugeordnet sind und wobei zwischen den Ausgängen (17, 18, 19) des Wechselrichters (3) und den Wicklungen (U, V, W) jeweils ein Leistungshalbleiterschalter (2) angeordnet ist, und wobei eine Erkennungseinheit (10) zum Erkennen von defekten Schaltern (5), eine Einheit (11) zur Spannungsmessung an den Ausgängen (17, 18, 19) des Wechselrichters (3) und ein Motorwinkellagensensor (6) zur Ermittlung der Motorwinkellage (ϕ) vorgesehen ist, wobei nach der Erkennung eines defekten Schalters (5) der Wechselrichter (3) von einem Mikrocontroller (4) in der Weise abgeschaltet wird, dass keine weitere Leistung in die Wicklungen (U, V, W) des Elektromotors (1) mehr eingebracht wird, **dadurch gekennzeichnet,**
**dass** der Motorwinkellagensensor (6) die Leistungshalbleiterschalter (2) nacheinander in einer vorab bestimmten Motorwinkellage (ϕ_{U}, ϕ_{V}, ϕ_{W}) öffnet, wobei Motorwinkel- und Motorgeschwindigkeitsinformationen zum sicheren Öffnen der Leistungshalbleiterschalter (2) direkt aus dem Motorwinkellagensensor (6) heraus generiert werden.

2. Verfahren nach Anspruch 1, **dadurch gekennzeichnet, dass** die Motorwinkellagen (ϕ_{U}, ϕ_{V}, ϕ_{W}) jeweils einer Wicklung (U, V, W) und deren Leistungshalbleiterschalter (2) zugeordnet werden und so gewählt werden, dass die zugeordneten Leistungshalbleitschalter (2) beim Öffnen nicht beschädigt werden.

3. Verfahren nach Anspruch 1 oder 2, **dadurch gekennzeichnet, dass** die Motorwinkellagen (ϕ_{U}, ϕ_{V}, ϕ_{W}) so gewählt werden, dass der an den Leistungshalbleiterschaltern (2) anliegende Drainstrom (I_{D}) null oder nahezu null ist.

4. Verfahren nach Anspruch 1 oder 2, **dadurch gekennzeichnet, dass** die Motorwinkellagen (ϕ_{U}, ϕ_{V}, ϕ_{W}) so gewählt werden, dass der an den Leistungshalbleiterschaltern (2) anliegende Drainstrom (I_{D}) negativ ist.

5. Verfahren nach einem der vorhergehenden Ansprüche, **dadurch gekennzeichnet, dass** die Motorwinkellagen (ϕ_{U}, ϕ_{V}, ϕ_{W}) unabhängig vom Ort des defekten Schalters (5) und ausschließlich in Abhängigkeit der Drehrichtung des Elektromotors (1) bestimmt werden.

6. Vorrichtung zum Betrieb eines bürstenlosen Elektromotors (1), dessen Wicklungen (U, V, W) von einem Wechselrichter (3) mit Hilfe von sechs Schalter (5) angesteuert werden, wobei der Wechselrichter (3) drei Ausgänge (17, 18, 19) aufweist, die den Wicklungen (U, V, W) des Elektromotors (1) zugeordnet sind und wobei zwischen den Ausgängen (17, 18, 19) des Wechselrichters (3) und den Wicklungen (U, V, W) jeweils ein Leistungshalbleiterschalter (2) angeordnet ist, und wobei eine Erkennungseinheit (10) zum Erkennen von defekten Schaltern (5), eine Einheit (11) zur Spannungsmessung an den Ausgängen (17, 18, 19) des Wechselrichters (3) und ein Motorwinkellagensensor (6) zur Ermittlung der Motorwinkellage (ϕ) vorgesehen ist, wobei der Wechselrichter (3) nach der Erkennung eines defekten Schalters (5) vom Mikrocontroller (4) in der Weise abgeschaltet wird, sodass keine weitere Leistung in die Wicklungen (U, V, W) des Elektromotors (1) mehr eingebracht wird, **dadurch gekennzeichnet, dass** der Motorwinkellagensensor (6) dazu eingerichtet ist, die Leistungshalbleiterschalter (2) nacheinander in einer vorab bestimmten Motorwinkellage (ϕ_{U}, ϕ_{V} ϕ_{W}) zu öffnen, wobei Motorwinkel- und Motorgeschwindigkeitsinformationen zum sicheren Öffnen der Leistungshalbleiterschalter (2) direkt aus dem Motorwinkellagensensor (6) heraus generiert werden.

7. Vorrichtung nach Anspruch 6, **dadurch gekennzeichnet, dass** der Motorwinkellagensensor (6) dazu eingerichtet ist, die Motorwinkellagen (ϕ_{U}, ϕ_{V}, ϕ_{W}) jeweils einer Wicklung (U, V, W) und deren Leistungshalbleiterschalter (2) zuzuordnen und so zu wählen, dass die zugeordneten Leistungshalbleitschalter (2) beim Öffnen nicht beschädigt werden.

8. Vorrichtung nach Anspruch 6 oder 7, **dadurch gekennzeichnet, dass** der Motorwinkellagensensor (6) dazu eingerichtet ist, die Motorwinkellagen (ϕ_{U}, ϕ_{V}, ϕ_{W}) so zu wählen, dass der an den Leistungshalbleiterschaltern (2) anliegende Drainstrom (I_{D}) null, nahezu null oder negativ ist.

9. Vorrichtung nach einem der Ansprüche 6 bis 8, **dadurch gekennzeichnet, dass** die Leistungshalbleitschalter (2) als Leistungs-MOSFET ausgebildet sind.

10. Vorrichtung nach einem der Ansprüche 6 bis 9, **dadurch gekennzeichnet, dass** die Einheit (10) zum Erkennen von defekten Schaltern (5) und die Einheit (11) zur Spannungsmessung an den Ausgängen (17, 18, 19) des Wechselrichters (3) in den Mikrocontroller (4) integriert sind.

## Claims

1. Method for operating a brushless electric motor (1), the windings (U, V, W) of which are controlled by an AC converter (3) with the aid of six switches (5), wherein the AC converter (3) comprises three outputs (17, 18, 19) that are allocated to the windings (U, V, W) of the electric motor (1) and wherein a power semiconductor switch (2) is arranged in each case between the outputs (17, 18, 19) of the AC converter (3) and the windings (U, V, W) and wherein a detection unit (10) for detecting defective switches (5), a unit (11) for measuring the voltage at the outputs (17, 18, 19) of the AC converter (3) and a motor position angle sensor (6) for determining the motor position angle (ϕ) are provided, wherein after detecting a defective switch (5), the AC converter (3) is switched off by a microcontroller (4) in such a manner that power is no longer introduced into the windings (U, V, W) of the electric motor (1), **characterized in that** the motor position angle sensor (6) opens the power semiconductor switches (2) in succession in a previously defined motor position angle (ϕ_{U}, ϕ_{V}, ϕ_{W}), wherein motor angle and motor speed information for securely opening the power semiconductor switches (2) is generated directly from the motor position angle sensor (6).

2. Method according to Claim 1, **characterized in that** the motor position angles (ϕ_{U}, ϕ_{V}, ϕ_{W}) are allocated in each case to a winding (U, V, W) and to the power semiconductor switch (2) thereof and are selected in such a manner that the allocated power semiconductor switches (2) are not damaged during the opening process.

3. Method according to Claim 1 or 2, **characterized in that** the motor position angles (ϕ_{U}, ϕ_{V}, ϕ_{W}) are selected in such a manner that the drain current (I_{D}) prevailing at the power semiconductor switches (2) is zero or almost zero.

4. Method according to Claim 1 or 2, **characterized in that** the motor position angles (ϕ_{U}, ϕ_{V}, ϕ_{W}) are selected in such a manner that the drain current (I_{D}) prevailing at the power semiconductor switches (2) is negative.

5. Method according to one of the preceding claims, **characterized in that** the motor position angles (ϕ_{U}, ϕ_{V}, ϕ_{W}) are not dependent upon the position of the defective switch (5) and are defined solely in dependence upon the rotation direction of the electric motor (1).

6. Device for operating a brushless electric motor (1), the windings (U, V, W) of which are controlled by an AC converter (3) with the aid of six switches (5), wherein the AC converter (3) comprises three outputs (17, 18, 19) that are allocated to the windings (U, V, W) of the electric motor (1) and wherein a power semiconductor switch (2) is arranged in each case between the outputs (17, 18, 19) of the AC converter (3) and the windings (U, V, W) and wherein a detection unit (10) for detecting defective switches (5), a unit (11) for measuring the voltage at the outputs (17, 18, 19) of the AC converter (3) and a motor position angle sensor (6) for determining the motor position angle (ϕ) are provided, wherein after detecting a defective switch (5), the AC converter (3) is switched off by the microcontroller (4) in such a manner that power is no longer introduced into the windings (U, V, W) of the electric motor (1), **characterized in that** the motor position angle sensor (6) is designed to open the power semiconductor switches (2) in succession in a previously defined motor position angle (ϕ_{U}, ϕ_{V}, ϕ_{W}), wherein motor angle and motor speed information for securely opening the power semiconductor switches (2) is generated directly from the motor position angle sensor (6).

7. Device according to Claim 6, **characterized in that** the motor position angle sensor (6) is designed so as to allocate the motor position angles (ϕ_{U}, ϕ_{V}, ϕ_{W}) in each case to a winding (U, V, W) and to the power semiconductor switch (2) thereof and to select said power semiconductor switches in such a manner that the allocated power semiconductor switches (2) are not damaged during the opening process.

8. Device according to Claim 6 or 7, **characterized in that** the motor position angle sensor (6) is designed so as to select the motor position angles (ϕ_{U}, ϕ_{V}, ϕ_{W}) in such a manner that the drain current (I_{D}) prevailing at the power semiconductor switches (2) is zero, almost zero or negative.

9. Device according to one of Claims 6 to 8 **characterized in that** the power semiconductor switches (2) are embodied as power MOSFETs.

10. Device according to one of Claims 6 to 9, **characterized in that** the unit (10) for detecting defective switches (5) and the unit (11) for measuring voltage at the outputs (17, 18, 19) of the AC converter (3) are integrated into the microcontroller (4).

## Revendications

1. Procédé permettant de faire fonctionner un moteur électrique sans balais (1), dont les enroulements (U, V, W) sont excités par un onduleur (3) à l'aide de six commutateurs (5), dans lequel l'onduleur (3) comporte trois sorties (17, 18, 19) associées aux enroulements (U, V, W) du moteur électrique (1) et dans lequel un commutateur à semi-conducteurs de puissance (2) est respectivement agencé entre les sorties (17, 18, 19) de l'onduleur (3) et les enroulements (U, V, W), et dans lequel il est prévu une unité de détection (10) destinée à détecter des commutateurs défectueux (5), une unité (11) destinée à mesurer la tension aux sorties (17, 18, 19) de l'onduleur (3) et un capteur de position angulaire du moteur (6) destiné à déterminer la position angulaire du moteur (ϕ), dans lequel, après la détection d'un commutateur défectueux (5), l'onduleur (3) est déconnecté par un microcontrôleur (4) de telle sorte qu'aucune puissance supplémentaire ne soit injectée dans les enroulements (U, V, W) du moteur électrique (1), **caractérisé en ce que** le capteur de position angulaire du moteur (6) ouvre les commutateurs à semi-conducteurs de puissance (2) les uns après les autres dans une position angulaire du moteur (ϕ_{U}, ϕ_{V}, ϕ_{W}) déterminée au préalable, dans lequel des informations d'angle du moteur et de vitesse du moteur permettant d'ouvrir les commutateurs à semi-conducteurs de puissance (2) de manière fiable sont générées directement à partir du capteur de position angulaire du moteur (6).

2. Procédé selon la revendication 1, **caractérisé en ce que** les positions angulaires du moteur (ϕ_{U}, ϕ_{V}, ϕ_{W}) sont respectivement associées à un enroulement (U, V, W) et à ses commutateurs à semi-conducteurs de puissance (2) et sont sélectionnées de telle sorte que les commutateurs à semi-conducteurs de puissance (2) associés ne soient pas endommagés lors de l'ouverture.

3. Procédé selon la revendication 1 ou 2, **caractérisé en ce que** les positions angulaires du moteur (ϕ_{U}, ϕ_{V}, ϕ_{W}) sont sélectionnées de telle sorte que le courant de drain (I_{D}) appliqué aux commutateurs à semi-conducteurs de puissance (2) soit nul ou pratiquement nul.

4. Procédé selon la revendication 1 ou 2, **caractérisé en ce que** les positions angulaires du moteur (ϕ_{U}, ϕ_{V}, ϕ_{W}) sont sélectionnées de telle sorte que le courant de drain (I_{D}) appliqué aux commutateurs à semi-conducteurs de puissance (2) soit négatif.

5. Procédé selon l'une des revendications précédentes, **caractérisé en ce que** les positions angulaires du moteur (ϕ_{U}, ϕ_{V}, ϕ_{W}) sont déterminées indépendamment de la position du commutateur défectueux (5) et exclusivement en fonction du sens de rotation du moteur électrique (1).

6. Dispositif permettant de faire fonctionner un moteur électrique sans balais (1), dont les enroulements (U, V, W) sont excités par un onduleur (3) à l'aide de six commutateurs (5), dans lequel l'onduleur (3) comporte trois sorties (17, 18, 19) associées aux enroulements (U, V, W) du moteur électrique (1) et dans lequel un commutateur à semi-conducteurs de puissance (2) est respectivement agencé entre les sorties (17, 18, 19) de l'onduleur (3) et les enroulements (U, V, W), et dans lequel il est prévu une unité de détection (10) destinée à détecter des commutateurs défectueux (5), une unité (11) destinée à mesurer la tension aux sorties (17, 18, 19) de l'onduleur (3) et un capteur de position angulaire du moteur (6) destiné à déterminer la position angulaire du moteur (ϕ), dans lequel, après la détection d'un commutateur défectueux (5), l'onduleur (3) est déconnecté par le microcontrôleur (4) de telle sorte qu'aucune puissance supplémentaire ne soit injectée dans les enroulements (U, V, W) du moteur électrique (1), **caractérisé en ce que** le capteur de position angulaire du moteur (6) est conçu pour ouvrir les commutateurs à semi-conducteurs de puissance (2) les uns après les autres dans une position angulaire du moteur (ϕ_{U}, ϕ_{V}, ϕ_{W}) déterminée au préalable, dans lequel des informations d'angle du moteur et de vitesse du moteur permettant d'ouvrir les commutateurs à semi-conducteurs de puissance (2) de manière fiable sont générées directement à partir du capteur de position angulaire du moteur (6).

7. Dispositif selon la revendication 6, **caractérisé en ce que** le capteur de position angulaire du moteur (6) est conçu pour associer respectivement les positions angulaires du moteur (ϕ_{U}, ϕ_{V}, ϕ_{W}) à un enroulement (U, V, W) et à ses commutateurs à semi-conducteurs de puissance (2) et pour les sélectionner de telle sorte que les commutateurs à semi-conducteurs de puissance (2) associés ne soient pas endommagés lors de l'ouverture.

8. Dispositif selon la revendication 6 ou 7, **caractérisé en ce que** le capteur de position angulaire du moteur (6) est conçu pour sélectionner les positions angulaires du moteur (ϕ_{U}, ϕ_{V}, ϕ_{W}) de telle sorte que le courant de drain (I_{D}) appliqué aux commutateurs à semi-conducteurs de puissance (2) soit nul, pratiquement nul ou négatif.

9. Dispositif selon l'une des revendications 6 à 8, **caractérisé en ce que** les commutateurs à semi-conducteurs de puissance (2) sont des MOSFET de puissance.

10. Dispositif selon l'une des revendications 6 à 9, **caractérisé en ce que** l'unité (10) permettant de détecter des commutateurs défectueux (5) et l'unité (11) permettant de mesurer la tension aux sorties (17, 18, 19) de l'onduleur (3) sont intégrées dans le microcontrôleur (4) .
